# FASCICULE DE BREVET EUROPEEN

(11) **EP 4 121 466 B1**
(45) Date de publication et mention de la délivrance du brevet: **23.10.2024**
(21) Numéro de dépôt: 21718939.8
(22) Date de dépôt: 17.03.2021
(51) Int. Cl.: C08F 2/32, C08L 33/26, D21H 17/37, D21H 17/45

(54) **NOUVEAUX COMPLEXES DE POLYMERES HYDROSOLUBLES SOUS FORME D'EMULSION INVERSE ET LEURS UTILISATIONS**
NEUE WASSERLÖSLICHE POLYMERKOMPLEXE IN FORM EINER INVERSEN EMULSION UND VERWENDUNGEN DAVON
NOVEL WATER-SOLUBLE POLYMER COMPLEXES IN THE FORM OF AN INVERSE EMULSION AND USES THEREOF

(30) Priorité: 20.03.2020 FR 2002772
(43) Date de publication de la demande: 25.01.2023
(73) Titulaire: SNF Group, 42160 Andrézieux-Bouthéon (FR)
(72) Inventeur: HUND, René, 42160 ANDREZIEUX BOUTHEON (FR); FAUCHER, Gatien, 42160 ANDREZIEUX BOUTHEON (FR); FOUGEROUSE, Damien, 42160 ANDREZIEUX BOUTHEON (FR)
(74) Mandataire: Cabinet Laurent & Charras
(86) Numéro de dépôt international: PCT/FR2021/050442
(87) Numéro de publication internationale: WO 2021/186132

(56) Documents cités:
- WO-A1-2009/053029
- WO-A1-2010/118841
- FR-A1- 3 080 853

## Description

### Domaine de l'invention

La présente invention concerne un complexe de polymères hydrosolubles issu de la polymérisation en émulsion inverse d'un ou plusieurs monomères hydrosolubles en présence d'un polymère préalablement préparé.

Un autre aspect de l'invention concerne l'utilisation de ce complexe en tant qu'agent d'égouttage et notamment pour leur mise en oeuvre dans la fabrication du papier, du carton ou analogue.

### Etat antérieur de la technique

Le brevet US 9,546,246 de la Demanderesse permet de palier le problème de déphasage entre polymères. Ce brevet décrit un complexe de polymères et son utilisation en tant qu'agent de traitement de charges minérales et notamment pour sa mise en oeuvre dans la fabrication du papier, du carton ou analogue.

Le brevet FR 3 080 853 B1, également de la Demanderesse, décrit un complexe de polymères et son utilisation dans un procédé de fabrication de papier, carton ou analogues. Ce complexe de polymères est obtenu par polymérisation de monomères hydrosolubles en présence d'un polymère hôte comprenant des fonctions vinylamine, d'un agent de transfert non polymérique, et en l' absence d'agent ramifiant ou réticulant de type polyfonctionnel éthylénique
Les brevets US 7,001,953 et US 8,021,516 décrivent des polymères hydrosolubles pouvant être utilisés dans le traitement des boues et dans la fabrication du papier. Ces polymères sont obtenus par polymérisation de monomères en présence d'un polymère qui a été préparé préalablement et de manière indépendante. Comme indiqué dans ces documents, le polymère déjà synthétisé et le polymère en cours de synthèse, ne se greffent substantiellement pas.

Le document EP 262 945 A2 présente des mélanges d'agents de floculation cationiques composés de deux polymères différents et leurs méthodes de production. Les agents sont formés par polymérisation de monomères cationiques en un composant polymère cationique de haut poids moléculaire (floculant) en présence d'un composant polymère cationique de bas poids moléculaire (coagulant). Les propriétés de ces agents de floculation ne satisfont pas aux exigences de rapidité et d'efficacité imposées par les procédés techniques de floculation.

Quoi qu'il en soit, il existe une demande de complexe de polymères qui soit stable et qui soit satisfaisant au niveau des propriétés d'égouttage lors de leur mise en oeuvre dans la fabrication du papier, du carton ou analogue.

### Exposé de l'invention

La présente invention concerne un complexe de polymères comprenant un polymère hydrosoluble cationique (polymère hôte) choisi parmi la poly-(diméthylamine (co) épichlorohydrine) et la poly (diméthylamine-co-épichlorohydrine-co-éthylènediamine) et un ou plusieurs monomères hydrosolubles polymérisés en présence dudit polymère hôte hydrosoluble.

Le terme « hydrosoluble » désigne un composé (notamment un complexe de polymères ou un polymère ou un monomère) formant une solution aqueuse sans particules insolubles lorsqu'il est ajouté sous agitation pendant 4 heures à 25°C à une concentration de 20 g.L⁻¹ dans l'eau.

Plus précisément, l'objet de la présente invention concerne un complexe de polymères obtenu par polymérisation en émulsion inverse de monomères hydrosolubles en présence d'un (ou plusieurs) polymère hôte hydrosoluble cationique comprenant des fonctions amine choisi parmi la poly-(diméthylamine (co) épichlorohydrine) et la poly (diméthylamine-co-épichlorohydrine-co-éthylènediamine)

La polymérisation de monomères hydrosolubles correspond à la polymérisation d'un seul type de monomères hydrosolubles (par exemple acrylamide) ou de plusieurs types de monomères hydrosolubles (par exemple acrylamide et l'ADAME quaternisé avec le chlorure de méthyle).

Dans le complexe ainsi obtenu, le(s) polymère(s) résultant de la polymérisation des monomères se ramifie avec le polymère hôte. Il ne s'agit pas d'un mélange de polymères mais d'un complexe dans lequel le polymère hôte joue le rôle d'agent de transfert, lors de la polymérisation des monomères.

L'agent de transfert, en l'occurrence le polymère hôte, permet de contrôler la longueur des chaînes polymériques formées pendant la polymérisation des monomères hydrosolubles.

Par polymère, on entend un homopolymère ou un copolymère issu de la polymérisation de monomères respectivement identiques ou distincts.

Un autre aspect de l'invention est l'utilisation de ce complexe de polymères hydrosolubles en tant qu'agent de d'égouttage et d'abattement de la turbidité dans la fabrication de papiers, de cartons ou d'analogues.

### * Polymère hôte

Le polymère hôte est une polyamine ayant des groupements ammonium et des groupements hydroxyle choisi parmi la poly-(diméthylamine (co) épichlorohydrine) et la poly (diméthylamine-co-épichlorohydrine-co-éthylènediamine). Il peut également comprendre des groupements amine secondaire.

Le polymère hôte est une polyamine choisie dans le groupe comprenant la poly-(diméthylamine (co) épichlorohydrine) et la poly (diméthylamine-co-épichlorohydrine-co-éthylènediamine). Préférentiellement, la polyamine est un poly (diméthylamine-co-épichlorohydrine-co-éthylènediamine).

Selon variante de l'invention, le polymère hôte peut être un poly(épichlorohydrine-diméthylamine) comprenant généralement l'unité de répétition -[N⁺(CH₃)₂CH₂CHOHCH_{2]}Cl⁻-. La poly(épichlorohydrine-diméthylamine) peut être obtenue par la réaction entre la diméthylamine et l'épichlorohydrine, avantageusement dans un rapport stoechiométrique.

Selon une autre variante de l'invention, le polymère hôte peut être une poly(diméthylamine-co-épichlorohydrine-coéthylènediamine). Les polymères de ce type peuvent être obtenus en faisant réagir de la diméthylamine, de l'éthylènediamine et de l'épichlorohydrine

Selon une caractéristique préférée de l'invention, le polymère hôte est structuré. En d'autres termes, il peut avantageusement présenter une forme ramifiée, ou star (en forme d'étoile), ou comb (en forme de peigne).

Selon l'invention le polymère hôte a un poids moléculaire d'au moins 1000 g/mol, de préférence d'au moins 2000 g/mol, et encore plus préférentiellement d'au moins 5000 g/mol. En général, le poids moléculaire du polymère hôte est avantageusement inférieur à 2 millions g/mol plus avantageusement inférieur à 1 million g/mol.

### * Le complexe de polymères hydrosolubles

Il est issu de la polymérisation en émulsion inverse de monomères hydrosolubles au cours de laquelle le polymère hôte préexistant joue le rôle d'agent de transfert. Ainsi, la présente invention peut être réalisée en l'absence d'agent de transfert non polymérique. De manière avantageuse, le poids moléculaire d'un agent de transfert non polymérique est inférieur à 200 g/mol.

Le ou les monomères hydrosolubles mis en oeuvre lors de la préparation du complexe de polymères hydrosolubles peuvent notamment être au moins un monomère cationique et/ou au moins un monomère non ionique et/ou au moins un monomère anionique. Il peut également s'agir de monomère(s) zwitterionique(s). Préférentiellement, les monomères hydrosolubles mis en oeuvre lors de la préparation du complexe de polymères hydrosolubles sont au moins un monomère cationique et au moins un monomère non ionique.

Selon un mode de réalisation préféré, le complexe de polymères est réalisé en l'absence de monomères non hydrosolubles, notamment les monomères de type ester de (méth)acrylate.

Le ou les monomères cationiques pouvant être utilisés dans le cadre de l'invention peuvent être avantageusement choisis parmi les sels de diallyldialkyl ammonium comme le chlorure de diallyl diméthyl ammonium (DADMAC) ; les sels acidifiés ou quaternisés d'acrylates et méthacrylates de dialkylaminoalkyle, en particulier d'acrylate de dialkylaminoéthyle (ADAME) et de méthacrylate de dialkylaminoéthyle (MADAME) ; les sels acidifiés ou quaternisés de dialkyl-aminoalkylacrylamides ou méthacrylamides, comme par exemple le méthacrylamido-propyl triméthyl ammonium chlorure (MAPTAC), l'acrylamido-propyl triméthyl ammonium chlorure (APTAC) et les produits de Mannich comme les dialkylaminométhylacrylamides quaternisés.

Les groupements « alkyle » de ces monomères peuvent être linéaires, cycliques (substitués ou non) ou ramifies. Ils peuvent être identiques ou non. Ils présentent un nombre d'atomes de carbone avantageusement compris entre 1 et 10, plus avantageusement entre 1 et 8, encore plus avantageusement entre 1 et 4. Il s'agit préférentiellement d'un groupe methyl ou éthyl. Ainsi, les sels acidifiés ou quaternisés d'ADAME et de MADAME sont avantageusement les sels acidifiés ou quaternisés de l'acrylate de diméthylaminoéthyle et du méthacrylate de diméthylaminoéthyle.

Les sels acidifiés sont obtenus par les moyens connus de l'homme de métier, et notamment par protonation. Les sels quaternisés sont également obtenus par les moyens connus de l'homme du métier notamment, par réaction avec un halogénure d'alkyle, un halogénure d'aryle, par exemple le chlorure de benzyle, le chlorure de méthyle (MeCI), les chlorures d'aryle, d'alkyle, ou le diméthylsulfate. Le monomère cationique est avantageusement l'AD AME quaternisé avec le chlorure de méthyle.

Selon l'invention, la proportion en monomère cationique mis en oeuvre est avantageusement comprise entre 1 %mol et 80 %mol, de préférence entre 2 %mol et 60 %mol, et encore plus préférentiellement entre 5 %mol et 40 %mol, par rapport au nombre total de monomères hydrosolubles mis en oeuvre.

Le ou les monomères non ioniques pouvant être utilisés dans le cadre de l'invention peuvent être choisi parmi l'acrylamide, le méthacrylamide, le N-isopropylacrylamide, le N,N-diméthylacrylamide et le N-méthylolacrylamide. Egalement, peuvent être utilisés la N-vinylformamide, le N-vinyl acetamide, la N-vinylpyridine et la N-vinylpyrrolidone, l'acryloyl morpholine (ACMO) et la diacétone acrylamide. Un monomère non ionique préféré est l'acrylamide.

Selon l'invention, la proportion en monomère non ionique mis en oeuvre est avantageusement comprise entre 20 %mol et 99 %mol, de préférence entre 40 %mol et 98 %mol, et encore plus préférentiellement entre 60 %mol et 95 %mol, par rapport au nombre total de monomères hydrosolubles mis en oeuvre.

Le ou les monomères anioniques pouvant être utilisés dans le cadre de l'invention peuvent être choisis dans un large groupe. Ces monomères peuvent présenter des fonctionnalités vinyliques, notamment acryliques, maléiques, fumariques, allyliques et contenir un groupe carboxylate, phosphonate, phosphate, sulfate, sulfonate, ou un autre groupe à charge anionique. Le monomère peut être acide ou bien sous forme de sel ou de métal alcalino terreux, de métal alcalin ou d'ammonium (avantageusement ammonium quaternaire) correspondant d'un tel monomère. Des exemples de monomères convenables comprennent l'acide acrylique, l'acide méthacrylique, l'acide itaconique, l'acide crotonique, l'acide maléique, l'acide fumarique et les monomères de type acide fort présentant par exemple une fonction de type acide sulfonique ou acide phosphonique tels que l'acide 2-acrylamido 2-methylpropane sulfonique, l'acide vinylsulfonique, l'acide vinylphosphonique, l'acide allylsulfonique, l'acide allylphosphonique, l'acide styrène sulfonique, et les sels de ces monomères solubles dans l'eau d'un métal alcalin, d'un métal alcalino terreux, et d'ammonium. Un monomère préféré est l'acide acrylique.

Selon l'invention la proportion en monomère anionique mis en oeuvre est avantageusement comprise entre 0 %mol et 80 %mol, de préférence entre 1 %mol et 60 %mol, et encore plus préférentiellement entre 2 %mol et 40 %mol, par rapport au nombre total de monomères hydrosolubles mis en oeuvre.

Le ratio massique monomères hydrosolubles / polymère hôte est préférentiellement compris entre 99 / 1 et 1 / 99, plus préférentiellement compris entre 95 / 5 et 40 / 60.

De manière avantageuse, la présente invention met en oeuvre au moins deux types de monomères hydrosolubles distincts, avantageusement un monomère non ionique et un monomère cationique, plus avantageusement l'acrylamide et un monomère cationique (par exemple l'ADAME quaternisé avec le chlorure de méthyle).

Selon l'invention, le complexe de polymères est avantageusement obtenu par polymérisation en émulsion inverse. La polymérisation en émulsion inverse couvre également la polymérisation en microémulsion inverse. Cette technique de polymérisation est bien connue de l'homme de métier. Elle consiste à mettre en émulsion, dans une phase huile, une phase aqueuse contenant le ou les monomères. Cette émulsification se fait généralement grâce à un tensioactif eau dans huile. Après polymérisation du ou des monomères, un tensioactif huile dans eau est éventuellement ajouté pour faciliter, ultérieurement, l'inversion de l'émulsion dans l'eau.

A la fin de la réaction de polymérisation, il est possible que l'émulsion obtenue soit diluée ou concentrée. En particulier, il est possible de concentrer, par exemple par distillation, l'émulsion. Une telle concentration sera menée avec ou sans introduction au préalable d'un agent émulsifiant du type huile dans eau (H/E).

De manière avantageuse, le procédé de préparation du complexe de polymères peut comprendre les étapes suivantes :
- préparation d'une phase aqueuse comprenant au moins un polymère hôte et des monomères hydrosolubles ;
- émulsification de ladite solution aqueuse dans une phase huile ;
- obtention du complexe de polymères par polymérisation des monomères hydrosolubles.

Préférentiellement, lors de la préparation du complexe, le polymère hôte est introduit dans le réacteur avec les monomères. La polymérisation est ensuite initiée par ajout des catalyseurs.

De manière préférentielle la polymérisation s'effectue en l'absence d'agent ramifiant ou réticulant de type polyfonctionnel éthylénique, par exemple en l'absence de N,N-méthylène-bis-acrylamide. Elle est avantageusement réalisée en l'absence d'agent ramifiant ou réticulant de poids moléculaire inférieur à 200g g/mol.

Un autre aspect de l'invention est l'utilisation des complexes de polymères hydrosolubles dans la fabrication de papiers, de cartons ou d'analogues.

Le procédé de fabrication de papier, carton ou analogues, selon l'invention peut comprendre les étapes suivantes, sur une machine à papier :
- mise en suspension aqueuse de fibres, avantageusement de fibres cellulosiques ;
- addition du complexe de polymères objet de l'invention dans la suspension aqueuse de fibres ;
- formation d'une feuille de papier, carton ou analogue sur la toile de la machine à papier ;
- séchage de la feuille.

Le complexe de polymères peut être ajouté à la suspension de fibres, en un ou plusieurs points d'injection, dans la pâte diluée et/ou dans la pâte épaisse.

En plus du complexe, d'autres composés connus de l'homme de métier peuvent être associés. On pourra citer de manière non limitative les dispersants, les biocides ou encore les agents antimousses.

Ce procédé peut également comprendre l'addition de polymères distincts du complexe selon l'invention. On pourra citer à titre d'exemple les coagulants, les agents de rétention, les floculants ou encore l'amidon. Ces additifs peuvent être de nature polymérique ou minérale, par exemple la bentonite.

Ainsi, le procédé de fabrication de papier, carton ou analogues, peut comprendre l'addition, avant la formation de la feuille, d'au moins un additif, distinct du complexe de polymères, choisi parmi les coagulants, les agents de rétention, les floculants et l'amidon.

De manière préférée, le complexe de polymères est ajouté avant la pompe de mélange, dans la pâte épaisse.

Les diverses étapes du procédé de fabrication de papier, carton ou analogues sont conformes aux techniques faisant partie des connaissances de l'homme du métier.

La quantité de complexe ajouté est avantageusement comprise entre 3 g de matière active/tonne de fibres (poids sec en fibres, avantageusement cellulosiques) et 10000 g/T, préférentiellement entre 10 g/T et 7000g/T et encore plus préférentiellement entre 30 g/T et 3000 g/T.

L'utilisation de complexe de polymères s'inscrit dans un principe général d'amélioration des performances des produits. La réduction de la quantité de produit nécessaire à l'application participe donc implicitement à la réduction des rejets de gaz à effets de serre tels que le CO₂. De plus l'utilisation du complexe de polymères permet une économie d'énergie lors de l'étape séchage de la feuille de papier qui nécessite moins de vapeur.

Les exemples ci-après illustrent l'invention sans toutefois la limiter.

### Liste des figures

La figure 1 représente un graphique de la viscosité UL par rapport au ratio monomère/polyamine.
La figure 2 illustre le pourcentage, par rapport à un test de référence (blanc), de l'amélioration du drainage en pâte épaisse et mesure de la turbidité.
La figure 3 illustre le pourcentage, par rapport à un test de référence (blanc), de l'amélioration de l'égouttage sous vide en pâte diluée et mesure de la turbidité.
La figure 4 illustre la performance d'égouttage sous vide en pâte diluée et la mesure de la turbidité, par rapport à un test de référence (blanc).
La figure 5 illustre la valeur de la siccité avant pressage, par rapport à un test de référence (blanc).
La figure 6 illustre le pourcentage, par rapport à un test de référence (blanc), de l'amélioration de l'égouttage sous vide en pâte diluée et la mesure de la turbidité.
La figure 7 illustre la performance d'égouttage sous vide en pâte diluée et la mesure de la turbidité, par rapport à un test de référence (blanc).
La figure 8 illustre l'amélioration (en pourcentage) de l'égouttage sous vide en pâte diluée et la mesure de la turbidité par rapport à un test de référence (blanc).

### Exemples de réalisation de l'invention

Dans les exemples qui suivent :
- La polyamine H-1 est un poly-(diméthylamine/épichlorohydrine/éthylènediamine), structuré, de viscosité Brookfield 850cps (Module LV2, 30 tr.min⁻¹, 23°C) à 50% de matière active en poids dans l'eau.
- La polyamine H-2 est un poly-(diméthylamine/épichlorohydrine), linéaire, de viscosité Brookfield 30cps (Module LV1, 60 tr.min⁻¹, 23°C) à 50% de matière active en poids dans l'eau.
- P-3: est un polymère sous forme émulsion inverse anionique, poly-(acrylamide/acide acrylique) linéaire, de viscosité UL = 8.16cps (Viscosité Brookfield, Module UL, NaCl 1M, 60 tr.min⁻¹, 23°C) à 29% de matière active en poids dans l'eau.
- P-4: est un polymère sous forme poudre cationique, poly-(acrylamide/acrylate de diméthylaminoéthyle, MeCl) linéaire, de viscosité UL = 4.1 1cps (Viscosité Brookfield, Module UL, NaCl 1M, 60 tr.min⁻¹, 23°C) à 92% de matière active en poids dans l'eau.
- Bentonite : Microparticule inorganique, commercialisée par CLARIANT sous le nom OPAZIL ABG.

### * Synthèse d'un polymère en émulsion inverse P1

La phase aqueuse est préparée en ajoutant 359.8g d'acrylamide (solution à 50% en poids dans l'eau), 262.6g d'acrylate de diméthylaminoéthyle, MeCl (solution à 80% en poids dans l'eau) et 90.2g d'eau. Le pH de la solution est ajusté entre 4 et 5 avec de l'acide adipique. On ajoute ensuite 100-250 ppm/MS (masse en monomères secs) de bromate de potassium et 800-1500 ppm/MS de diethylenetriaminepentaacétate de sodium en tant qu'initiateurs.

La phase organique est préparée en ajoutant dans un réacteur 234.2g d'huile Exxsol D100S, 4.7g de monooléate de sorbitan, 8.2g monooléate de sorbitan 3 OE (groupement oxyethylène), 11.1g de monooléate de sorbitan 5 OE (groupement oxyethylène) et 4.8g de polymère tensioactif huile dans eau (Rhodibloc RS).

On transfère ensuite la phase aqueuse dans la phase organique puis on émulsifie, par exemple à l'Ultra-Turax, à 8000tr/min pendant 1 minute afin d'obtenir une émulsion inverse uniforme.

L'émulsion inverse est désoxygénée avec un barbotage d'azote pendant 30 min. La polymérisation est initiée par addition de bisulfite de sodium et on maintient la température à 55°C pendant 1h30 environ. Le milieu réactionnel est enfin traité avec un excès de bisulfite de sodium pour réduire les monomères libres.

L'émulsion inverse réalisée, on mesure la viscosité Brookfield (Module UL, NaCl 1M, 60 tr.min⁻¹, 23°C). On obtient une viscosité UL de 4.21cps pour une matière active de 39% en poids.

### * Synthèse du polymère en émulsion inverse P2

La phase aqueuse est préparée en ajoutant 491.3g d'acrylamide (solution à 50% en poids dans l'eau), 92.9g d'acrylate de diméthylaminoéthyle, MeCl (solution à 80% en poids dans l'eau) et 149.2g d'eau. Le pH de la solution est ajusté entre 4 et 5 avec de l'acide adipique. On ajoute ensuite 100-250 ppm/MS de bromate de potassium et 800-1500 ppm/MS de diethylenetriaminepentaacétate de sodium en tant qu'initiateurs.

La phase organique est préparée en ajoutant dans un réacteur 213.2g d'huile Exxsol D100S, 26g de monooléate de sorbitan et 3.8g de polymère tensioactif (Rhodibloc RS).

On transfère ensuite la phase aqueuse dans la phase organique puis on émulsifie, par exemple à l'Ultra-Turax, à 8000tr/min pendant 1 minute afin d'obtenir une émulsion inverse uniforme.

L'émulsion inverse est désoxygénée avec un barbotage d'azote pendant 30 min. La polymérisation est initiée par addition de bisulfite de sodium et on maintient la température à 55°C pendant 1h30 environ. Le milieu réactionnel est enfin traité avec un excès de bisulfite de sodium pour réduire les monomères libres.

L'émulsion inverse réalisée, on mesure la viscosité Brookfield (Module UL, NaCl 1M, 60 tr.min⁻¹, 23°C). On obtient une viscosité UL de 4.26cps pour une matière active de 32% en poids.

### * Synthèse d'un complexe en émulsion inverse selon l'invention (I-1)

La phase aqueuse est préparée en ajoutant 369.1g d'acrylamide (solution à 50% en poids dans l'eau), 256.8g d'acrylate de diméthylaminoéthyle, MeCl (solution à 80% en poids dans l'eau), 2.2g d'eau et 82.5g de polyamine H-1. Le pH de la solution est ajusté entre 4 et 5 avec de l'acide adipique. On ajoute ensuite 100-250 ppm/MS de bromate de potassium et 800-1500 ppm/MS de diethylenetriaminepentaacétate de sodium en tant qu'initiateurs.

La phase organique est préparée en ajoutant dans un réacteur 234.2g d'huile Exxsol D100S, 4.7g de Monooléate de sorbitan, 8.2g Monooléate de sorbitan 3 OE (groupement oxyethylène), 11.1g de Monooléate de sorbitan 5 OE (groupement oxyethylène) et 4.8g de polymère tensioactif (Rhodibloc RS).

On transfère ensuite la phase aqueuse dans la phase organique puis on émulsifie, par exemple à l'Ultra-Turax, à 8000tr/min pendant 1 minute afin d'obtenir une émulsion inverse uniforme.

L'émulsion inverse est désoxygénée avec un barbotage d'azote pendant 30 min. La polymérisation est initiée par addition de bisulfite de sodium et on maintient la température à 55°C pendant 1h30 environ. Le milieu réactionnel est enfin traité avec un excès de bisulfite de sodium pour réduire les monomères libres.

L'émulsion inverse réalisée, on mesure la viscosité Brookfield (Module UL, NaCl 1M, 60 tr.min⁻¹, 23°C). On obtient une viscosité UL de 3.81cps pour une matière active de 43.1% en poids.

### * Synthèse d'un complexe en émulsion inverse selon l'invention (1-2)

La phase aqueuse est préparée en ajoutant 290.6g d'acrylamide (solution à 50% en poids dans l'eau), 212.1g d'acrylate de diméthylaminoéthyle, MeCl (solution à 80% en poids dans l'eau), 1g d'eau et 213.4g de polyamine H-1. Le pH de la solution est ajusté entre 4 et 5 avec de l'acide adipique. On ajoute ensuite 100-250 ppm/MS de bromate de potassium et 800-1500 ppm/MS de diethylenetriaminepentaacétate de sodium en tant qu'initiateurs.

La phase organique est préparée en ajoutant dans un réacteur 234.2g d'huile Exxsol D100S, 4.7g de Monooléate de sorbitan, 8.2g Monooléate de sorbitan 3 OE (groupement oxyethylène), 11.1g de Monooléate de sorbitan 5 OE (groupement oxyethylène) et 4.8g de polymère tensioactif (Rhodibloc RS).

On transfère ensuite la phase aqueuse dans la phase organique puis on émulsifie, par exemple à l'Ultra-Turax, à 8000tr/min pendant 1 minute afin d'obtenir une émulsion inverse uniforme.

L'émulsion inverse est désoxygénée avec un barbotage d'azote pendant 30 min. La polymérisation est initiée par addition de bisulfite de sodium et on maintient la température à 55°C pendant 1h30 environ. Le milieu réactionnel est enfin traité avec un excès de bisulfite de sodium pour réduire les monomères libres.

L'émulsion inverse réalisée, on mesure la viscosité Brookfield (Module UL, NaCl 1M, 60 tr.min⁻¹, 23°C). On obtient une viscosité UL de 3.71cps pour une matière active de 42.1% en poids.

### * Synthèse d'un complexe en émulsion inverse selon l'invention (1-3)

La phase aqueuse est préparée en ajoutant 287.8g d'acrylamide (solution à 50% en poids dans l'eau), 210.1g d'acrylate de diméthylaminoéthyle, MeCl (solution à 80% en poids dans l'eau), 0.7g d'eau et 237.5g de polyamine H-1. Le pH de la solution est ajusté entre 4 et 5 avec de l'acide adipique. On ajoute ensuite 100-250 ppm/MS de bromate de potassium et 800-1500 ppm/MS de diethylenetriaminepentaacétate de sodium en tant qu'initiateurs.

La phase organique est préparée en ajoutant dans un réacteur 214.2g d'huile Exxsol D100S, 4.7g de Monooléate de sorbitan, 8.2g Monooléate de sorbitan 3 OE (groupement oxyethylène), 11.1g de Monooléate de sorbitan 5 OE (groupement oxyethylène) et 4.8g de polymère tensioactif (Rhodibloc RS).

On transfère ensuite la phase aqueuse dans la phase organique puis on émulsifie, par exemple à l'Ultra-Turax, à 8000tr/min pendant 1 minute afin d'obtenir une émulsion inverse uniforme.

L'émulsion inverse est désoxygénée avec un barbotage d'azote pendant 30 min. La polymérisation est initiée par addition de bisulfite de sodium et on maintient la température à 55°C pendant 1h30 environ. Le milieu réactionnel est enfin traité avec un excès de bisulfite de sodium pour réduire les monomères libres.

L'émulsion inverse réalisée, on mesure la viscosité Brookfield (Module UL, NaCl 1M, 60 tr.min⁻¹, 23°C). On obtient une viscosité UL de 3.46cps pour une matière active de 43.1% en poids.

### * Synthèse d'un complexe en émulsion inverse selon l'invention (1-4)

La phase aqueuse est préparée en ajoutant 250.9g d'acrylamide (solution à 50% en poids dans l'eau), 183.1g d'acrylate de diméthylaminoéthyle, MeCl (solution à 80% en poids dans l'eau), 0.9g d'eau et 280.1g de polyamine H-1. Le pH de la solution est ajusté entre 4 et 5 avec de l'acide adipique. On ajoute ensuite 100-250 ppm/MS de bromate de potassium et 800-1500 ppm/MS de diethylenetriaminepentaacétate de sodium en tant qu'initiateurs.

La phase organique est préparée en ajoutant dans un réacteur 234.2g d'huile Exxsol D100S, 4.7g de Monooléate de sorbitan, 8.2g Monooléate de sorbitan 3 OE (groupement oxyethylène), 11.1g de Monooléate de sorbitan 5 OE (groupement oxyethylène) et 4.8g de polymère tensioactif (Rhodibloc RS).

On transfère ensuite la phase aqueuse dans la phase organique puis on émulsifie, par exemple à l'Ultra-Turax, à 8000tr/min pendant 1 minute afin d'obtenir une émulsion inverse uniforme.

L'émulsion inverse est désoxygénée avec un barbotage d'azote pendant 30 min. La polymérisation est initiée par addition de bisulfite de sodium et on maintient la température à 55°C pendant 1h30 environ. Le milieu réactionnel est enfin traité avec un excès de bisulfite de sodium pour réduire les monomères libres.

L'émulsion inverse réalisée, on mesure la viscosité Brookfield (Module UL, NaCl 1M, 60 tr.min⁻¹, 23°C). On obtient une viscosité UL de 3.01cps pour une matière active de 41.2% en poids.

### * Synthèse d'un complexe en émulsion inverse selon l'invention (1-5)

La phase aqueuse est préparée en ajoutant 184.5g d'acrylamide (solution à 50% en poids dans l'eau), 134.7g d'acrylate de diméthylaminoéthyle, MeCl (solution à 80% en poids dans l'eau), 0.5g d'eau et 396g de polyamine H-1. Le pH de la solution est ajusté entre 4 et 5 avec de l'acide adipique. On ajoute ensuite 100-250 ppm/MS de bromate de potassium et 800-1500 ppm/MS de diethylenetriaminepentaacétate de sodium en tant qu'initiateurs.

La phase organique est préparée en ajoutant dans un réacteur 234.2g d'huile Exxsol D100S, 4.7g de Monooléate de sorbitan, 8.2g Monooléate de sorbitan 3 OE (groupement oxyethylène), 11.1g de Monooléate de sorbitan 5 OE (groupement oxyethylène) et 4.8g de polymère tensioactif (Rhodibloc RS).

On transfère ensuite la phase aqueuse dans la phase organique puis on émulsifie, par exemple à l'Ultra-Turax, à 8000tr/min pendant 1 minute afin d'obtenir une émulsion inverse uniforme.

L'émulsion inverse est désoxygénée avec un barbotage d'azote pendant 30 min. La polymérisation est initiée par addition de bisulfite de sodium et on maintient la température à 55°C pendant 1h30 environ. Le milieu réactionnel est enfin traité avec un excès de bisulfite de sodium pour réduire les monomères libres.

L'émulsion inverse réalisée, on mesure la viscosité Brookfield (Module UL, NaCl 1M, 60 tr.min⁻¹, 23°C). On obtient une viscosité UL de 2.51cps pour une matière active de 39.8% en poids.

### * Synthèse d'un complexe en émulsion inverse selon l'invention (1-6)

La phase aqueuse est préparée en ajoutant 439.1g d'acrylamide (solution à 50% en poids dans l'eau), 83.1g d'acrylate de diméthylaminoéthyle, MeCl (solution à 80% en poids dans l'eau), 0.2g d'eau et 214g de polyamine H-1. Le pH de la solution est ajusté entre 4 et 5 avec de l'acide adipique. On ajoute ensuite 100-250 ppm/MS de bromate de potassium et 800-1500 ppm/MS de diethylenetriaminepentaacétate de sodium en tant qu'initiateurs.

La phase organique est préparée en ajoutant dans un réacteur 213.2g d'huile Exxsol D100S, 26g de Monooléate de sorbitan et 3.8g de polymère tensioactif (Rhodibloc RS).

On transfère ensuite la phase aqueuse dans la phase organique puis on émulsifie, par exemple à l'Ultra-Turax, à 8000tr/min pendant 1 minute afin d'obtenir une émulsion inverse uniforme.

L'émulsion inverse est désoxygénée avec un barbotage d'azote pendant 30 min. La polymérisation est initiée par addition de bisulfite de sodium et on maintient la température à 55°C pendant 1h30 environ. Le milieu réactionnel est enfin traité avec un excès de bisulfite de sodium pour réduire les monomères libres.

L'émulsion inverse réalisée, on mesure la viscosité Brookfield (Module UL, NaCl 1M, 60 tr.min⁻¹, 23°C). On obtient une viscosité UL de 3.61cps pour une matière active de 39.3% en poids.

### * Synthèse d'un complexe en émulsion inverse selon l'invention (1-7)

La phase aqueuse est préparée en ajoutant 287.8g d'acrylamide 50% en poids dans l'eau, 210.1g d'acrylate de diméthylaminoéthyle, MeCl 80% en poids dans l'eau, 0.7g d'eau et 237.5g de polyamine H-2. Le pH de la solution est ajusté entre 4 et 5 avec de l'acide adipique. On ajoute ensuite 100-250 ppm/MS de bromate de potassium et 800-1500 ppm/MS de diethylenetriaminepentaacétate de sodium en tant qu'initiateurs.

La phase organique est préparée en ajoutant dans un réacteur 214.2g d'huile Exxsol D100S, 4.7g de Monooléate de sorbitan, 8.2g Monooléate de sorbitan 3 OE (groupement oxyethylène), 11.1g de Monooléate de sorbitan 5 OE (groupement oxyethylène) et 4.8g de polymère tensioactif (Rhodibloc RS).

On transfère ensuite la phase aqueuse dans la phase organique puis on émulsifie, par exemple à l'Ultra-Turax, à 8000tr/min pendant 1 minute afin d'obtenir une émulsion inverse uniforme.

L'émulsion inverse est désoxygénée avec un barbotage d'azote pendant 30 min. La polymérisation est initiée par addition de bisulfite de sodium à l'aide d'un pousse-seringue. Elévation puis maintien de la température à 55°C pendant 1h30 environ. Le milieu réactionnel est enfin traité avec un excès de bisulfite de sodium pour réduire les monomères libres.

L'émulsion inverse réalisée, on mesure la viscosité Brookfield (Module UL, NaCl 1M, 60 tr.min⁻¹, 23°C). On obtient une viscosité UL de 3.31cps pour une matière active de 43.1% en poids.

### * Synthèse d'un complexe en émulsion inverse selon l'invention (1-8)

La phase aqueuse est préparée en ajoutant 537.3g d'acrylamide 50% en poids dans l'eau, 101.7g d'acrylate de diméthylaminoéthyle, MeCl 80% en poids dans l'eau, 0.7g d'eau et 73g de polyamine H-1. Le pH de la solution est ajusté entre 4 et 5 avec de l'acide adipique. On ajoute ensuite 100-250 ppm/MS de bromate de potassium et 800-1500 ppm/MS de diethylenetriaminepentaacétate de sodium en tant qu'initiateurs.

La phase organique est préparée en ajoutant dans un réacteur 210.3g d'huile Exxsol D100S, 25.9g de Monooléate de sorbitan et 3.7g de polymère tensioactif (Rhodibloc RS).

On transfère ensuite la phase aqueuse dans la phase organique puis on émulsifie, par exemple à l'Ultra-Turax, à 8000tr/min pendant 1 minute afin d'obtenir une émulsion inverse uniforme.

L'émulsion inverse est désoxygénée avec un barbotage d'azote pendant 30 min. La polymérisation est initiée par addition de bisulfite de sodium à l'aide d'un pousse-seringue. Elévation puis maintien de la température à 55°C pendant 1h30 environ. Le milieu réactionnel est enfin traité avec un excès de bisulfite de sodium pour réduire les monomères libres.

L'émulsion inverse réalisée, on mesure la viscosité Brookfield (Module UL, NaCl 1M, 60 tr.min⁻¹, 23°C). On obtient une viscosité UL de 4.01cps pour une matière active de 38.6% en poids.

### * Synthèse d'un complexe en émulsion inverse selon l'invention (1-9)

La phase aqueuse est préparée en ajoutant 280.5g d'acrylamide (solution à 50% en poids dans l'eau), 204.7g d'acrylate de diméthylaminoéthyle, MeCl (solution à 80% en poids dans l'eau), 0.7g d'eau et 227.5g de polyamine H-1. Le pH de la solution est ajusté entre 4 et 5 avec de l'acide adipique. On ajoute 2-25ppm/MS d'hypophosphite de sodium en tant qu'agent limitant ainsi que 2-25ppm/MS de méthylène bis acrylamide en tant qu'agent réticulant. On ajoute ensuite 100-250 ppm/MS de bromate de potassium et 800-1500 ppm/MS de diéthylènetriaminepentaacétate de sodium en tant qu'initiateurs.

La phase organique est préparée en ajoutant dans un réacteur 211.2g d'huile Exxsol D100S, 4.7g de Monooléate de sorbitan, 8.2g Monooléate de sorbitan 3 OE (groupement oxyéthylène), 11.1g de Monooléate de sorbitan 5 OE (groupement oxyéthylène) et 4.8g de polymère surfactant (Rhodibloc RS).

On transfère ensuite la phase aqueuse dans la phase organique puis on émulsifie à l'Ultra-Turax à 8000tr/min pendant 1 minute afin d'obtenir une émulsion inverse uniforme.

L'émulsion inverse est désoxygénée avec un barbotage d'azote pendant 30 min. La polymérisation est initiée par addition de bisulfite de sodium et on maintient la température à 55°C pendant 1h30 environ. Le milieu réactionnel est enfin traité avec un excès de bisulfite de sodium pour réduire les monomères libres.

L'émulsion inverse réalisée, on mesure la viscosité Brookfield (Module UL, NaCl 1M, 60 tr.min⁻¹, 23°C). On obtient une viscosité UL de 2.31cps pour une matière active de 41.8%.

Concernant la stabilité des émulsions inverses selon l'invention (I-1 à I-9), nous n'observons aucun déphasage après plusieurs semaines de stockage à température ambiante.

### * Synthèse d'un mélange de polymères en émulsion inverse (M-1)

Dans un bécher d'IL, on pèse 767.8g de l'émulsion P2 que l'on place sous agitation grâce à une pâle d'agitation de type demi-lune. On ajoute 205.2g de polyamine H-1 lentement puis on laisse le mélange sous agitation pendant 10 minutes afin de s'assurer de son homogénéité. Le mélange présente une matière active de 35.8% en poids. On observe un déphasage du mélange après une semaine de stockage à température ambiante.

### * Synthèse d'un mélange de polymères en émulsion inverse (M-2)

Dans un bécher d'IL, on pèse 571.8g de l'émulsion P1 que l'on place sous agitation grâce à une pâle d'agitation de type demi-lune. On ajoute 300g de polyamine H-1 lentement puis on laisse le mélange sous agitation pendant 10 minutes afin de s'assurer de son homogénéité. Le mélange présente une matière active de 38.2% en poids. On observe un déphasage du mélange après une semaine de stockage à température ambiante.

### * Synthèse d'un mélange de polymères en émulsion inverse (M-3)

Dans un bécher d'IL, on pèse 759.9g de l'émulsion P2 que l'on place sous agitation grâce à une pâle d'agitation de type demi-lune. On ajoute 54g de polyamine H-1 lentement puis on laisse le mélange sous agitation pendant 10 minutes afin de s'assurer de son homogénéité. Le mélange présente une matière active de 33.2% en poids. On observe un déphasage du mélange après une semaine de stockage à température ambiante.

### * Synthèse d'un polymère sous forme de poudre (C-1)

Dans un réacteur de polymérisation, on charge 748.7g d'acrylamide 50%, 126.2g d'acrylate de diméthylaminoéthyle, MeCl 80%, 431.5g d'eau et 95g de polyamine H-1. Le pH de la solution est ajusté entre 3 et 4 avec de l'acide adipique. La solution est refroidie à une température entre 0 et 2°C puis désoxygénée avec un barbotage d'azote pendant 15 minutes. On ajoute ensuite 1-15 ppm/MS de persulfate de sodium et 1-15 ppm/MS de Sel de Mohr en tant qu'initiateurs.

La température de réaction augmente de 0 à 90°C et on obtient le polymère sous forme de gel. Ce gel est découpé, haché, séché pendant 45 minutes à une température de 75°C, broyé et enfin tamisé. On obtient ainsi un polymère sous forme poudre avec une taille de particule inférieure ou égale à 1mm.

Le polymère sous forme poudre réalisé, on mesure la viscosité Brookfield (Module UL, NaCl 1M, 60 tr.min⁻¹, 23°C). On obtient une viscosité UL de 3.76cps pour une matière active de 92.8% en poids dans l'eau.

**Tableau 1 : récapitulatif des exemples et des contre-exemples (PA = polyamine, %MA = pourcentage de matière active en poids)**

| Nom | Forme | Monomère cationique (%mol) | Type PA | % massique monomères/ polyamine | %MA | UL (cps) |
|---|---|---|---|---|---|---|
| P-1 | Emulsion | 30 | NA | 100/0 | 39 | 4.21 |
| P-2 | Emulsion | 10 | NA | 100/0 | 32 | 4.26 |
| H-1 | Liquide | NA | H-1 | 0/100 | 50 | NA |
| H-2 | Liquide | NA | H-2 | 0/100 | 50 | NA |
| I-1 | Emulsion | 30 | H-1 | 90/10 | 43 | 3.81 |
| I-2 | Emulsion | 30 | H-1 | 75/25 | 42 | 3.71 |
| I-3 | Emulsion | 30 | H-1 | 70/30 | 43 | 3.46 |
| I-4 | Emulsion | 30 | H-1 | 66/34 | 41 | 3.01 |
| I-5 | Emulsion | 30 | H-1 | 50/50 | 40 | 2.51 |
| I-6 | Emulsion | 10 | H-1 | 70/30 | 39 | 3.61 |
| I-7 | Emulsion | 30 | H-2 | 70/30 | 43 | 3.31 |
| I-8 | Emulsion | 10 | H-1 | 90/10 | 39 | 4.01 |
| I-9 | Emulsion | 30 | H-1 | 70/30 | 42 | 2.31 |
| M-1 | Mélange | 10 | H-1 | 70/30 | 36 | 4.26 |
| M-2 | Mélange | 30 | H-1 | 70/30 | 38 | 4.21 |
| M-3 | Mélange | 10 | H-1 | 90/10 | 33 | 4.26 |
| C-1 | Poudre | 10 | H-1 | 90/10 | 93 | 3.76 |
| P-3 | Emulsions | 30* | NA | 100/0 | 29 | 8,16 |
| P-4 | Poudre | 10 | NA | 100/0 | 92 | 4,11 |

| | | | | | | |
|---|---|---|---|---|---|---|
| **pourcentage molaire de monomère anionique* | | | | | | |

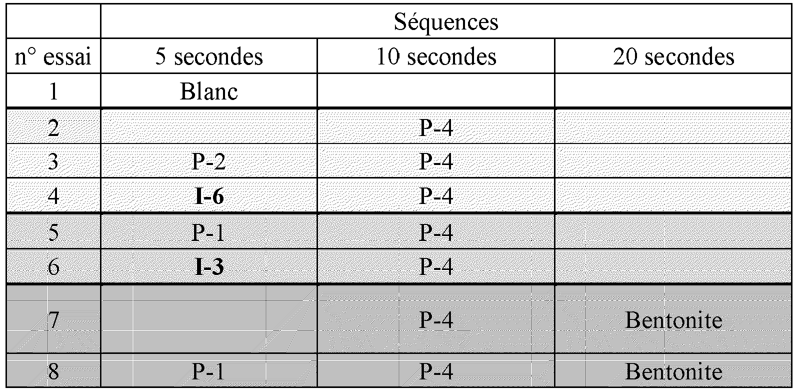

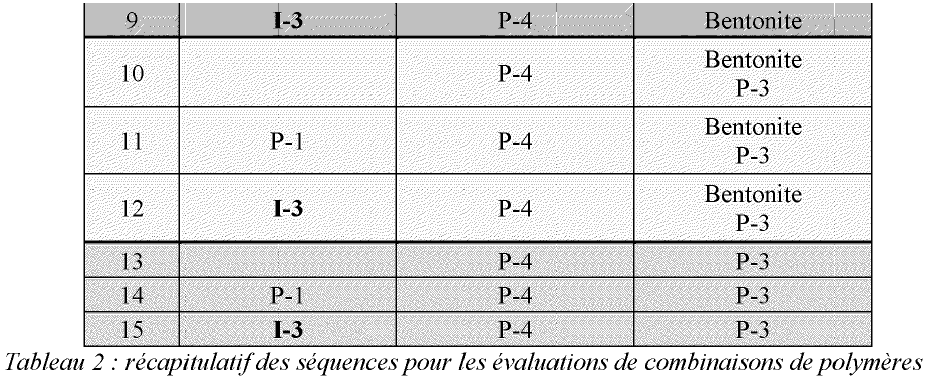

Les essais du tableau 2 sont analysés par groupe : [2-4], [5-6], [7-8-9], [10-11-12], et [13-14-15].

### * Procédures de tests d'évaluations

### * Pâte fibres recyclées :

La pâte humide est obtenue par désintégration de pâte sèche afin d'obtenir une concentration aqueuse finale de 4% massique dans l'eau pour réaliser la pâte épaisse, que l'on dilue dans l'eau à 1% massique pour obtenir la pâte diluée. Il s'agit d'une pâte à pH neutre composée à 100% de fibres de cartons recyclées.

### * Mesure de la viscosité UL :

500mg de polymère (résultant de la polymérisation des monomères, selon l'invention ou non) sont ajoutés dans 490ml d'eau déionisée. Après dissolution complète, 29,25 grammes de NaCl sont ajoutés.

La viscosité est mesurée à l'aide d'un viscosimètre Brookfield digitale DVII+ sur une vitesse de rotation à 60 tours/minute à 25°C (module UL).

### * Evaluation des performances d'égouttage (DDA) :

Le DDA (Dynamic Drainage Analyzer) permet de déterminer, de manière automatique, le temps (en secondes) nécessaire pour égoutter sous vide une suspension fibreuse. Les polymères sont ajoutés à la pâte humide (0.6 litre de pâte à 1.0 % massique) dans le cylindre du DDA sous agitation à 1000 tours par minute :
- Selon la séquence suivante pour l'évaluation d'un polymère seul :
   T=0s : mise en agitation de la pâte
   T=10s : ajout de l'agent d'égouttage cationique (350 g/t)
   T=30s : arrêt de l'agitation et égouttage sous vide à 200 mBar pendant 60s
- Selon la séquence suivante pour l'évaluation d'une combinaison de polymères :
   T=0s : mise en agitation de la pâte
   T=5s : ajout de l'agent d'égouttage cationique (350 g/t)
   T=10s : ajout du polymère cationique (250 g/t)
   T=20s : ajout du polymère anionique (150 g/t) et/ou de la bentonite (1,5 kg/t)
   T=30s : arrêt de l'agitation et égouttage sous vide à 200 mBar pendant 60s

Les dosages sont exprimés en gramme de matière active/tonne de fibres (poids sec en fibres, avantageusement cellulosiques).

La pression sous la toile est enregistrée en fonction du temps. Lorsque toute l'eau est évacuée du matelas fibreux, l'air passe à travers celui-ci faisant apparaitre une rupture de pente sur la courbe représentant la pression sous toile en fonction du temps. Le temps, exprimé en secondes, relevé à cette rupture de pente correspond au temps d'égouttage. Plus le temps est faible, meilleur est donc l'égouttage sous vide.

De plus, on mesure la turbidité des eaux blanches issues de la mesure de DDA. Plus la valeur de turbidité est faible, plus la rétention des particules solides dans le matelas fibreux est importante.

### * Siccité :

Le test de DDA permet d'égoutter l'eau libre de la suspension fibreuse sous vide. Le but du test de siccité est de mesurer la quantité d'eau liée dans le matelas fibreux. Pour cela, on récupère, du test de DDA, la galette de matelas fibreux obtenu, dont on mesure la masse avant et après séchage à l'étuve à 105°C pendant 2 heures. Le rapport des deux masses permet d'obtenir la siccité. Plus cette valeur est forte, plus le polymère d'égouttage élimine l'eau liée.

### * Evaluation des performances d'égouttage en pâte épaisse :

Dans un bécher, on traite 500ml de pâte épaisse à 4% dans l'eau, soumise à un faible taux de cisaillement (vitesse d'agitation de 300 tours par minute). On ajoute le polymère à cette suspension fibreuse avec un temps de contact T=1min.

On transfère cette pâte traitée dans le Canadian Standard Freeness Tester.

On enregistre le volume d'eau libéré au cours du temps. Plus la quantité d'eau libérée est importante, meilleur est l'égouttage de la pâte épaisse.

### * Turbidité :

La turbidité désigne la teneur de matière en suspension qui troublent le fluide. Elle est mesurée grâce à un spectrophotomètre HANNA, qui mesure la diminution de l'intensité du rayon lumineux sous un angle de 90°, à une longueur d'onde de 860 nm et exprimée en NTU.

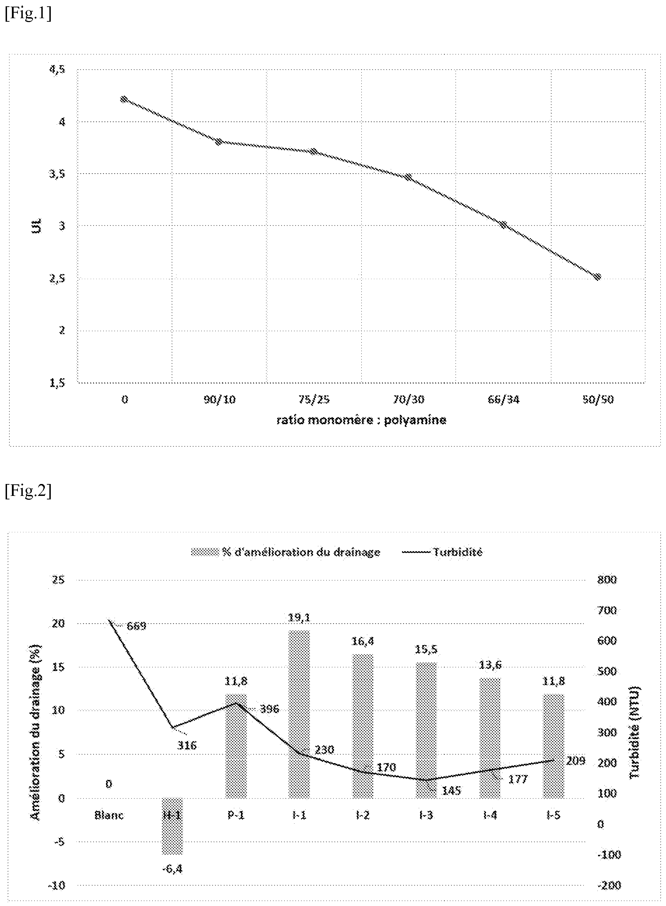

D'après la figure 1, on constate que, toutes choses étant égales par ailleurs, la viscosité UL baisse lorsque le ratio monomères/polyamine chute. On en conclut donc que la polyamine joue le rôle d'agent de transfert au polymère.

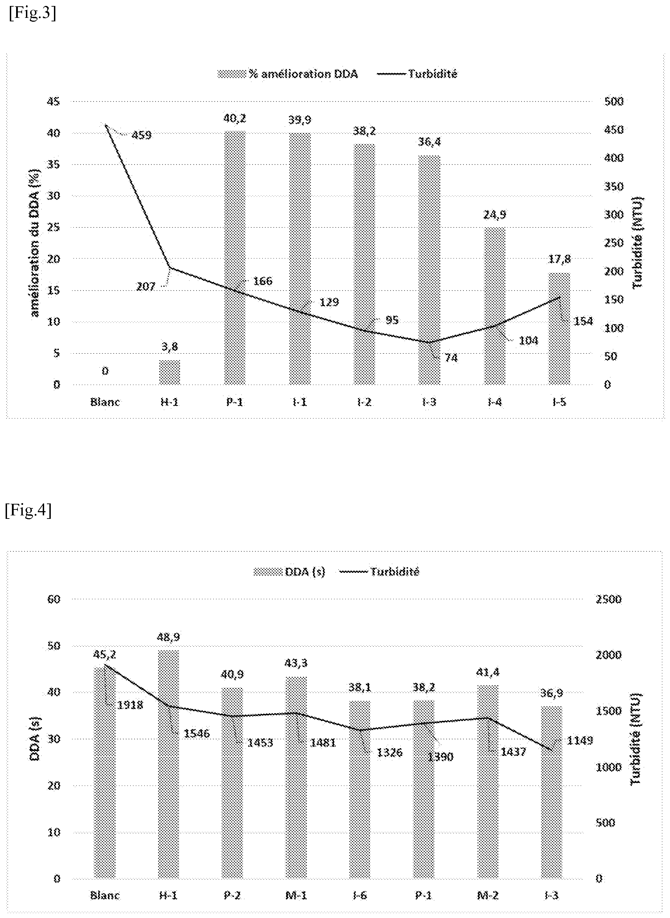

Selon les figures 2 et 3, quels que soient les produits de l'invention (I-1 à I-5) par rapport au polymère seul (P-1) et par rapport à la polyamine seule (H-1), on observe un effet de synergie concernant l'amélioration de l'égouttage de la pâte épaisse, l'égouttage sous vide de la pâte diluée (DDA) ainsi que de la turbidité. Dans ce cas, le ratio massique monomères/polyamine 70/30 (I-3) permet d'obtenir la combinaison gain égouttage de la pâte épaisse / égouttage sous vide de la pâte diluée (DDA) / turbidité la plus favorable.

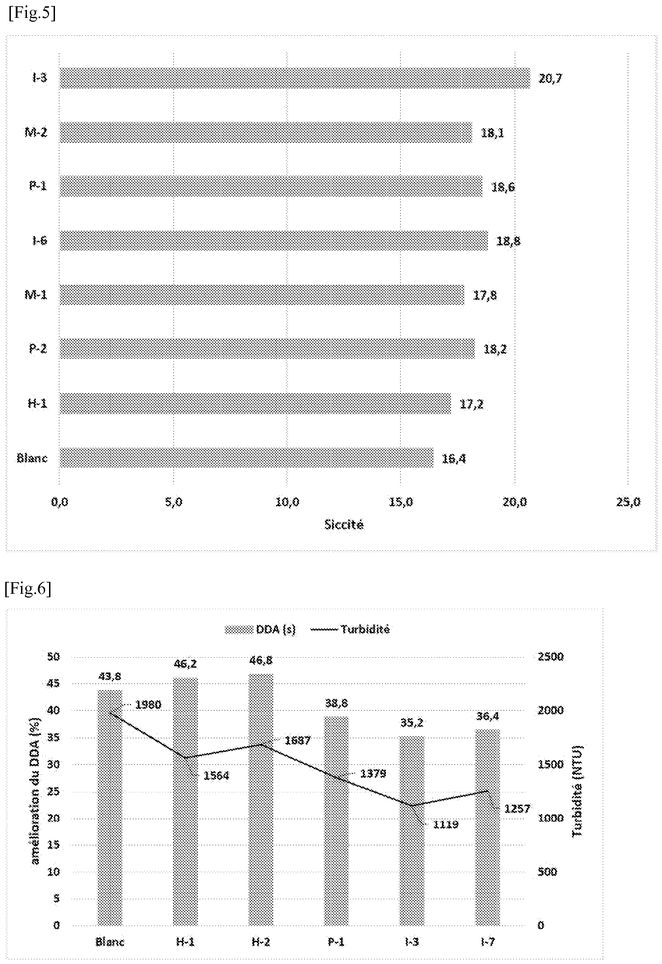

Selon les figures 4 et 5, on observe que les produits de l'invention (I-3 et I-6) sont bien plus performants en égouttage sous vide de la pâte diluée, en turbidité, ainsi qu'en siccité avant presse par rapport aux mélanges correspondant (M-1 et M-2) ainsi que par rapport aux produits seuls (H-1, P-1 et P-2).

Selon la figure 6, quelques soient les produits de l'invention (I-3 et I-7) par rapport aux produits seuls (P-1, H-1, H-2) on observe un effet de synergie concernant l'amélioration de l'égouttage sous vide de la pâte diluée (DDA) ainsi que de la turbidité. Dans ce cas précis, on remarque que la structure de la polyamine à un impact positif sur la performance applicative par rapport à une polyamine linéaire.

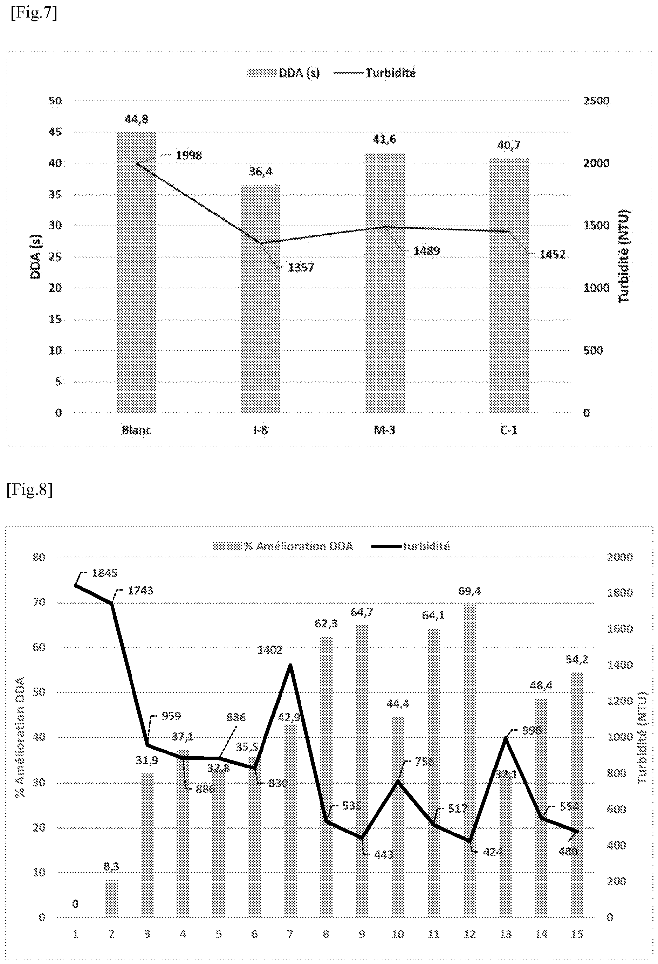

Selon la figure 7, on observe que la polymérisation sous forme d'émulsion inverse (I-8) reste bien plus performante par rapport à la forme poudre (C-1) et au mélange (M-3) correspondants. De plus la polymérisation sous forme émulsion inverse, avec une polyamine, permet de résoudre le problème de stabilité du simple mélange.

Selon la figure 8, dans les essais 2 à 15, les produits de l'invention I-3 et I-6, testés comparativement et respectivement aux produits P-1 et P-2 (tableau 2 ; essai 4 vs 2 et 3, essai 6 vs 2 et 5, essai 9 vs 7 et 8, essai 12 vs 10 et 11, et essai 15 vs 13 et 14), en combinaison avec un système de rétention (simple ou multi-composants), apportent de meilleures performances en termes d'amélioration de l'égouttage sous vide de la pâte diluée (DDA) ainsi que de réduction de la turbidité.

## Revendications

1. Complexe de polymères obtenu par polymérisation en émulsion inverse de monomères hydrosolubles : en présence d'un polymère hôte hydrosoluble cationique comprenant des fonctions amine ***caractérisé* en ce que** le polymère hôte est choisi parmi la poly-(diméthylamine (co) épichlorohydrine) et la poly (diméthylamine-co-épichlorohydrine-co-éthylènediamine).

2. Complexe de polymères selon la revendication 1, ***caractérisé* en ce que** le polymère hôte est la poly (diméthylamine-co-épichlorohydrine-co-éthylènediamine).

3. Complexe de polymères selon l'une des revendications 1 à 2, ***caractérisé* en ce que** le ratio massique entre les monomères hydrosolubles et le polymère hôte est compris entre 99/1 et 1 / 99, de préférence entre 95 / 5 et 40 / 60.

4. Complexe de polymères selon l'une des revendications précédentes, ***caractérisé* en ce que** les monomères hydrosolubles sont choisis dans le groupe comprenant :
- les sels d'ammonium quaternaires de l'acrylate de diméthylaminoéthyle (ADAME) ; les sels d'ammonium quaternaires du méthacrylate de diméthylaminoéthyle (MADAME) ; le chlorure de diméthyldiallylammonium (DADMAC) ; le chlorure d'acrylamido propyltriméthyl ammonium (APTAC) ; le chlorure de methacrylamido propyltriméthyl ammonium (MAPTAC) ;
- l'acrylamide ; le N-isopropylacrylamide ; le N, N-diméthylacrylamide ; la N-vinylformamide ; la N-vinylpyrrolidone ;
- l'acide acrylique ; l'acide méthacrylique ; l'acide itaconique ; l'acide crotonique ; l'acide maléique ; l'acide fumarique ; l'acide 2-acrylamido 2-méthylpropane sulfonique ; l'acide vinylsulfonique ; l'acide vinylphosphonique ; l'acide allylsulfonique ; l'acide allylphosphonique ; l'acide styrène sulfonique ; les sels hydrosolubles d'un métal alcalin, d'un métal alcalino terreux, ou d'ammonium de ces monomères.

5. Procédé de préparation du complexe de polymères objet de l'une des revendication 1 à 4 comprenant les étapes suivantes :
- préparation d'une phase aqueuse comprenant au moins un polymère hôte et des monomères hydrosolubles ;
- émulsification de ladite solution aqueuse dans une phase huile ;
- obtention du complexe de polymères par polymérisation des monomères hydrosolubles.

6. Procédé selon la revendication 5, ***caractérisé* en ce que** la polymérisation s'effectue en l'absence d'agent ramifiant ou réticulant de type polyfonctionnel éthylénique.

7. Procédé de fabrication de papier, carton ou analogues, selon lequel, avant formation de ladite feuille, on ajoute à une suspension de fibres, en un ou plusieurs points d'injection un complexe de polymères selon l'une des revendication 1 à 4.

8. Procédé selon la revendication 7, ***caractérisé* en ce que** la quantité de complexe de polymères ajouté est, en poids sec, comprise entre 3 g/tonne de fibres, avantageusement cellulosiques, et 10000 g/tonne de fibres, préférentiellement entre 10 g/tonne de fibres et 7000 g/tonne de fibres, et encore plus préférentiellement entre 30 g/tonne de fibres et 3000 g/tonne de fibres.

9. Procédé de fabrication de papier, carton ou analogues, comprenant les étapes suivantes, sur une machine à papier :
- mise en suspension aqueuse de fibres, avantageusement de fibres cellulosiques ;
- addition du complexe de polymères objet de l'une des revendications 1 à 4 ;
- formation d'une feuille de papier, carton ou analogue sur la toile de la machine à papier ;
- séchage de la feuille.

10. Procédé de fabrication de papier, carton ou analogues, selon l'une des revendications 7 à 9, ***caractérisé* en ce que** le procédé comprend l'addition, avant la formation de la feuille, l'addition d'au moins un additif, distinct du complexe selon l'une des revendications 1 à 4, choisi parmi les coagulants, les agents de rétention, les floculants et l'amidon.

## Patentansprüche

1. Polymerkomplex, erhalten durch inverse Emulsionspolymerisation von wasserlöslichen Monomeren in Gegenwart eines kationischen wasserlöslichen Wirtspolymers, das Aminfunktionen enthält, ***dadurch gekennzeichnet,* dass** das Wirtspolymer aus Poly-(dimethylamin(co)epichlorhydrin) und Poly-(dimethylamin-co-epichlorhydrin-co-ethylendiamin) ausgewählt ist.

2. Polymerkomplex nach Anspruch 1, ***dadurch gekennzeichnet,* dass** das Wirtspolymer Poly(dimethylamin-co-epichlorohydrin-co-ethylendiamin) ist.

3. Polymerkomplex nach einem der Ansprüche 1 bis 2, ***dadurch gekennzeichnet,* dass** das Massenverhältnis zwischen den wasserlöslichen Monomeren und dem Wirtspolymer zwischen 99 / 1 und 1 / 99, vorzugsweise zwischen 95 / 5 und 40 / 60, liegt.

4. Polymerkomplex nach einem der vorhergehenden Ansprüche, ***dadurch gekennzeichnet,* dass** die wasserlöslichen Monomere ausgewählt sind aus der Gruppe bestehend aus:
- den quartären Ammoniumsalzen von Dimethylaminoethylacrylat (ADAME); den quartären Ammoniumsalzen von Dimethylaminoethylmethacrylat (MADAME); Dimethyldiallylammoniumchorid (DADMAC); Acrylamidopropyltrimethylammoniumchlorid (APTAC); Methacrylamidopropyltrimethylammoniumchlorid (MAPTAC);
- Acrylamid; N-Isopropylacrylamid; N,N-Dimethylacrylamid; N-Vinylformamid; N-Vinylpyrrolidon;
- Acylsäure; Methacrylsäure; Itaconsäure, Crotonsäure; Maleinsäure; Fumarsäure; 2-Acrylamido-2-methylpropansulfonsäure; Vinylsulfonsäure; Vinylphosphonsäure; Allylsulfonsäure; Allylphosphonsäure; Styrol-sulfonsäure; den wasserlöslichen Salzen eines Alkalimetalls, eines Erdalkalimetalls oder Ammoniumsalzen dieser Monomere.

5. Verfahren zur Herstellung des Polymerkomplexes nach einem der Ansprüche 1 bis 4, das folgende Schritte umfasst:
- Herstellung einer wässrigen Phase, die mindestens ein Wirtspolymer und wasserlösliche Monomere enthält;
- Emulgieren der wässrigen Lösung in einer Ölphase;
- Gewinnung des Polymerkomplexes durch Polymerisation der wasserlöslichen Monomere.

6. Verfahren nach Anspruch 5, ***dadurch gekennzeichnet,* dass** die Polymerisation in Abwesenheit eines polyfunktionellen ethylenischen Verzweigungs- oder Vernetzungsmittels erfolgt.

7. Verfahren zur Herstellung von Papier, Pappe oder Ähnlichem, bei dem einer Fasersuspension an einer oder mehreren Einspritzstellen ein Komplex aus Polymeren nach einem der Ansprüche 1 bis 4 vor der Bildung des Blattes zugesetzt wird.

8. Verfahren nach Anspruch 7, ***dadurch gekennzeichnet,* dass** die Menge des zugesetzten Polymerkomplexes in Trockengewicht zwischen 3 g/Tonne Fasern, vorteilhafterweise Zellulosefasern, und 10.000 g/Tonne Fasern, vorzugsweise zwischen 10 g/Tonne Fasern und 7.000 g/Tonne Fasern und noch bevorzugter zwischen 30 g/Tonne Fasern und 3.000 g/Tonne Fasern, liegt.

9. Verfahren zur Herstellung von Papier, Pappe oder Ähnlichem, das folgende Schritte auf einer Papiermaschine umfasst:
- wässrige Suspendierung von Fasern, vorzugsweise von Zellulosefasern;
- Zugabe des Polymerkomplexes nach einem der Ansprüche 1 bis 4;
- Bildung eines Blattes aus Papier, Pappe oder Ähnlichem auf dem Sieb der Papiermaschine;
- Trocknen des Blattes.

10. Verfahren zur Herstellung von Papier, Pappe oder dergleichen nach einem der Ansprüche 7 bis 9, ***dadurch gekennzeichnet,* dass** bei dem Verfahren vor der Blattbildung mindestens ein Zusatzstoff zugegeben wird, der sich von dem Komplex nach einem der Ansprüche 1 â 4 unterscheidet und aus Koagulantien, Retentionsmitteln, Flockungsmitteln und Stärke ausgewählt ist.

## Claims

1. A polymer complex obtained by inverse emulsion polymerization of water-soluble monomers: in the presence of a cationic water-soluble host polymer comprising amine functions, **characterized in that** the host polymer is chosen from poly-(dimethylamine (co)epichlorohydrin) and poly(dimethylamine-co-epichlorohydrin-co-ethylenediamine).

2. The polymer complex according to claim 1, ***characterized* in that** the host polymer is poly(dimethylamine-co-epichlorohydrin-co-ethylenediamine).

3. The polymer complex according to any one of claims 1 to 2, ***characterized* in that** the mass ratio between the water-soluble monomers and the host polymer is between 99/1 and 1/99, preferably between 95/5 and 40/ 60.

4. The polymer complex according to any one of the preceding claims, ***characterized* in that** the water-soluble monomers are chosen from the group comprising:
- quaternary ammonium salts of dimethylaminoethyl acrylate (ADAME); quaternary ammonium salts of dimethylaminoethyl methacrylate (MADAME); dimethyldiallylammonium chloride (DADMAC); acrylamido propyltrimethyl ammonium chloride (APTAC); methacrylamido propyltrimethyl ammonium chloride (MAPTAC);
- acrylamide; N-isopropylacrylamide; N,N-dimethylacrylamide; N-vinylformamide; N-vinylpyrrolidone;
- acrylic acid; methacrylic acid; itaconic acid; crotonic acid; maleic acid; fumaric acid; 2-acrylamido 2-methylpropane sulfonic acid; vinylsulfonic acid; vinyl phosphonic acid; allylsulfonic acid; allylphosphonic acid; styrene sulfonic acid; water-soluble alkali metal, alkaline earth metal, or ammonium salts of these monomers.

5. A process for preparing the polymer complex object of any one of claims 1 to 4, comprising the following steps:
- preparing of an aqueous phase comprising at least one host polymer and water-soluble monomers;
- emulsifying said aqueous solution in an oil phase;
- obtaining the polymer complex by polymerization of the water-soluble monomers.

6. The process according to claim 5, ***characterized* in that** the polymerization is carried out in the absence of a branching agent or crosslinking agent of polyfunctional ethylenic type.

7. A process for the manufacture of paper, cardboard or the like, wherein, before forming said sheet, a polymer complex according to one of claims 1 to 4 is added to a suspension of fibers at one or more injection points.

8. The process according to claim 7, ***characterized* in that** the amount of polymer complex added is, by dry weight, between 3 g/ton of fibers, advantageously cellulosic, and 10,000 g/ton of fibers, preferably between 10 g/ton of fibers and 7000 g/ton of fibers, and, even more preferably, between 30 g/ton of fibers and 3000 g/ton of fibers.

9. A process for the manufacture of paper, cardboard or the like, comprising the following steps, on a paper machine:
- placing fibers, advantageously cellulosic fibers, in an aqueous suspension;
- adding the polymer complex, object of any one of claims 1 to 4;
- forming a sheet of paper, cardboard or the like on the wire surface of the paper machine;
- drying the sheet.

10. The process according to any one of claims 7 to 9, ***characterized* in that** the process comprises the addition, before forming said sheet, the addition of at least an additive, other than the complex according to any one of claims 1 to 4, chosen among coagulants, retention agents, flocculants and starch.
